# EUROPEAN PATENT APPLICATION

(11) **EP 4 578 306 A1**
(43) Date of publication of application: **02.07.2025**
(21) Application number: 24168094.1
(22) Date of filing: 02.04.2024
(51) Int. Cl.: A24F 40/40, A24F 40/485, A24F 40/10

(54) **ATOMIZATION DEVICE WITH STABLE PRESSURE RELIEF AND SUCTION**

(30) Priority: 28.12.2023 CN 202323612550 U
(71) Applicant: Shenzhen Hanqingda Technology Co., Ltd., Shenzhen Guangdong 518000 (CN)
(72) Inventor: HOU, Shoushan, Shenzhen, 518000 (CN); TANG, Chu, Shenzhen, 518000 (CN)
(74) Representative: Bratovic, Nino Maria

(57) **Abstract**

An atomization device with stable pressure relief and suction is disclosed, including an atomizer body. The atomizer body is internally provided with an e-liquid cup barrel, the e-liquid cup barrel is provided with an air guide pressure relief member, an atomizing core assembly and an e-liquid storage cotton, the atomizer body is provided with an air inlet hole at a lower end, the atomizer body is internally provided with a circulating e-liquid compartment, the e-liquid cup barrel is provided with a circulating e-liquid hole, the circulating e-liquid compartment is able to balance a pressure by flowing of e-liquid in the e-liquid cup barrel through the circulating e-liquid hole, and a lower end of the air guide pressure relief member is communicated with the air inlet hole.

## Description

### TECHNICAL FIELD

The present disclosure relates to the technical field of electronic cigarettes, and specifically relates to an atomization device with stable pressure relief and suction.

### BACKGROUND

Electronic cigarettes are electronic products that mimic cigarettes. The electronic cigarette is capable of vaporizing a liquid containing a nicotine component through an atomizer for the user to inhale. The e-cigarette is stored with an atomizing liquid and is equipped with an atomizer, which is powered by an electric core, capable of converting the liquid nicotine inside the barrel into a mist, and the electric core serves as the only power supply for the device, and for each disposable e-cigarette product, it is required to be equipped with a matching electric core.

Existing e-cigarettes are required to carry out simulated cycle testing before leaving the factory to detect whether there is e-liquid leakage. The existing 2ML e-liquid volume or more of the replacement barrel e-cigarettes, in the bare state, due to the lack of pressure relief structure, resulting in the placement of the set value (-60kpa) of the negative pressure box for simulation of the high altitude (8,000~10,000), the internal air pressure is unstable, the emergence of leakage phenomenon, which increases the cost of use, not conducive to improving the competitiveness of enterprises.

### SUMMARY

In order to solve the problems in the prior art, the present disclosure provides an atomization device with stable pressure relief and suction, which solves the problem that the atomization device in the prior art is unstable in the internal air pressure and prone to e-liquid leakage under different pressure environments.

The atomization device with stable pressure relief and suction in the present disclosure comprises an atomizer body, wherein the atomizer body is internally provided with an e-liquid cup barrel, the e-liquid cup barrel is provided with an air guide pressure relief member, an atomizing core assembly and an e-liquid storage cotton, the atomizer body is provided with an air inlet hole at a lower end, the atomizer body is internally provided with a circulating e-liquid compartment, the e-liquid cup barrel is provided with a circulating e-liquid hole, the circulating e-liquid compartment is able to balance a pressure by flowing of e-liquid in the e-liquid cup barrel through the circulating e-liquid hole, and a lower end of the air guide pressure relief member is communicated with the air inlet hole, and the air guide pressure relief member is able to cooperate with the air inlet hole to realize circulating pressure relief in the e-liquid cup barrel.

As a further improvement of the present disclosure, the air guide pressure relief member is an air guide tube, the e-liquid storage cotton is provided with an air guide perforation which cooperates with the air guide tube, an upper end of the air guide tube is arranged to pass through the air guide perforation and protrude out of an upper surface of the e-liquid storage cotton.

As a further improvement of the present disclosure, an inner wall of the e-liquid cup barrel is provided with an air-avoiding guide groove cooperating with the upper end of the air guide tube, and the upper end of the air guide tube is provided in the air-avoiding guide groove.

As a further improvement of the present disclosure, the air guide tube is provided in two, and the two air guide tubes are symmetrically provided on both sides of the atomizing core assembly.

As a further improvement of the present disclosure, the atomizer body is also provided with an atomizing e-liquid sealing silica gel and a lower e-liquid sealing silica gel, the lower e-liquid sealing silica gel is capable of sealing the atomizer body and a lower end of the e-liquid cup barrel, an inner wall of the e-liquid cup barrel is provided with an atomizing mounting position which is cooperated with an upper end of the atomizing core assembly, the atomizing e-liquid sealing silica gel is sleeved at the atomizing core assembly, the atomizing e-liquid sealing silica gel is able to ensure sealing between the upper end of the atomizing core assembly and the atomizing mounting position.

As a further improvement of the present disclosure, the atomizer body comprises an atomizer main case and an atomizer bottom case, and the atomizer main case is in snapped fit with the atomizer bottom case.

As a further improvement of the present disclosure, the atomizing device with stable pressure relief and suction further comprises an e-liquid-absorbing cotton, the atomizer bottom case is provided with an e-liquid-absorbing placing position for cooperating with the e-liquid-absorbing cotton, and an atomizing flow channel is provided within the atomizing core assembly, and the e-liquid-absorbing cotton is capable of adsorbing condensate and e-liquid left by an atomizing flow.

As a further improvement of the present disclosure, the atomization device with stable pressure relief and suction further comprises two electrode pillars, two atomizing pins are provided on the atomizing core assembly, the two atomizing pins cooperate with the two electrode pillars one by one, electrode holes are provided in the atomizer bottom case to cooperate with the electrode pillars, and a motor mounting groove is provided in the lower e-liquid sealing silica gel for fixing in cooperation with the electrode pillars.

As a further improvement of the present disclosure, the e-liquid cup barrel is provided with a mounting step on the inner wall to cooperate and install with the e-liquid storage cotton, and the mounting step is capable of restricting an upper end of the e-liquid storage cotton.

As a further improvement of the present disclosure, the atomization device with stable pressure relief and suction further comprises an upper sealing silica gel, a suction nozzle is provided at an upper end of the atomizer body, an upper end of the e-liquid cup barrel is provided with a clamping convex ring that cooperates with the suction nozzle, the upper sealing silica gel is sleeved on the clamping convex ring, and the upper sealing silica gel is able to ensure the sealing between the clamping convex ring and the suction nozzle.

Compared with the prior art, the beneficial effect of the present disclosure is as follows. The present disclosure provides an atomization device with stable pressure relief and suction, through which the e-liquid leakage problem in the prior art due to unstable internal air pressure in the atomization device in the different pressure environment can be effectively solved. By utilizing the product structure, the e-liquid in the circulating e-liquid compartment and circulating e-liquid cup barrel can circulate from the circulating e-liquid hole according to different pressure differentials, stabilizing and efficiently relieving pressure, ensuring pressure balance, reducing the probability of e-liquid leakage, effectively enhancing user experience, and contributing to improving the competitiveness of the enterprise.

### BRIEF DESCRIPTION OF DRAWINGS

In order to more clearly illustrate the embodiments in the present disclosure or the prior art, the following will be a brief introduction to the accompanying drawings to be used in the description of the embodiments or the prior art, and it is obvious that the accompanying drawings in the following description are some embodiments of the present disclosure, and for the person of ordinary skill in the art, other accompanying drawings can be obtained based on these drawings without putting in creative labor.
FIG. 1 shows a sectional view of the overall structure having a removable battery;
FIG. 2 shows a schematic diagram of a pressure relief process state of the structure having a removable battery, with the arrow in the diagram showing the direction of airflow;
FIG. 3 shows a schematic diagram of a balancing process state of the structure having removable battery, with the arrow in the diagram showing the direction of airflow;
FIG. 4 shows an explosive view of the structure having a removable battery.

### DETAILED DESCRIPTION

Unless otherwise defined, all technical and scientific terms used herein have the same meaning as commonly understood by those skilled in the art of the present disclosure; the terms used in the specification of the present disclosure are used only for the purpose of describing specific embodiments, and are not intended to be limiting; the terms "including" and "having" and any variations thereof in the specification of the present disclosure and in the claims and description of the drawings above are intended to cover non-exclusive inclusion. The terms "first", "second", etc. in the specification and claims of the present disclosure or in the accompanying drawings described above are used to distinguish between different objects and are not used to describe a particular order.

Reference to "embodiments" in the present disclosure means that particular features, structures or characteristics described in connection with the embodiments may be included in at least one embodiment of the present disclosure. The presence of the phrase at various points in the specification does not necessarily refer to the same embodiment, nor is it mutually exclusive, independent or alternative to other embodiments. It is understood by those skilled in the art, both explicitly and implicitly, that the embodiments described herein may be combined with other embodiments.

In order to enable those skilled in the art to better understand the embodiments of the present disclosure, the technical solutions in the embodiments of the present disclosure will be clearly and completely described below in conjunction with the accompanying drawings.

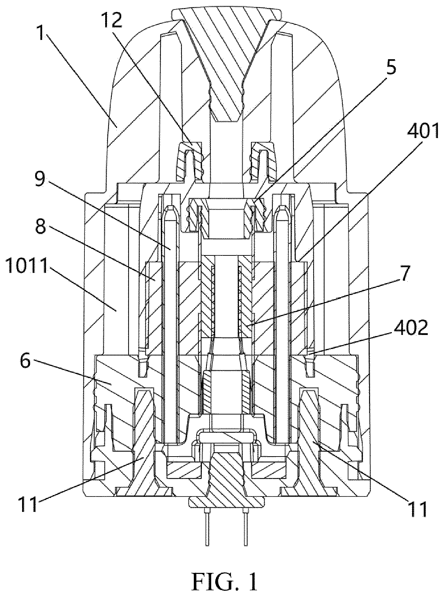

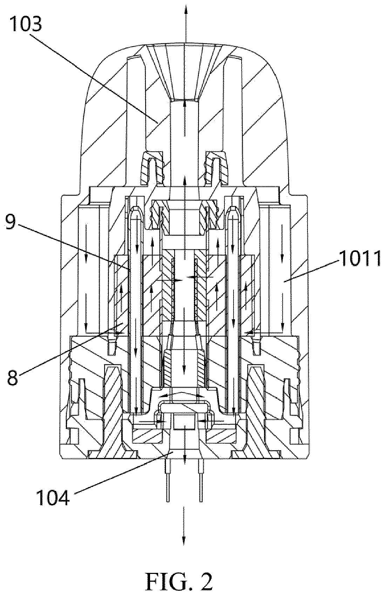

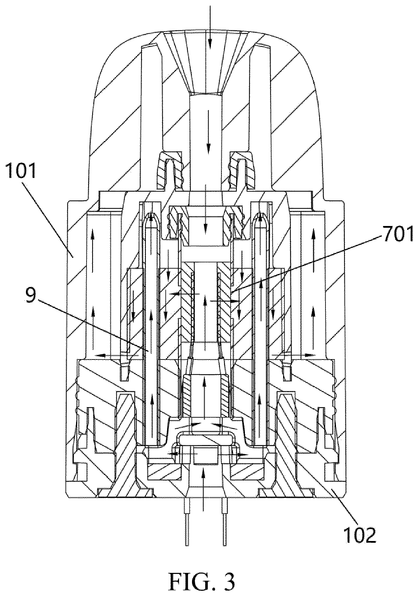

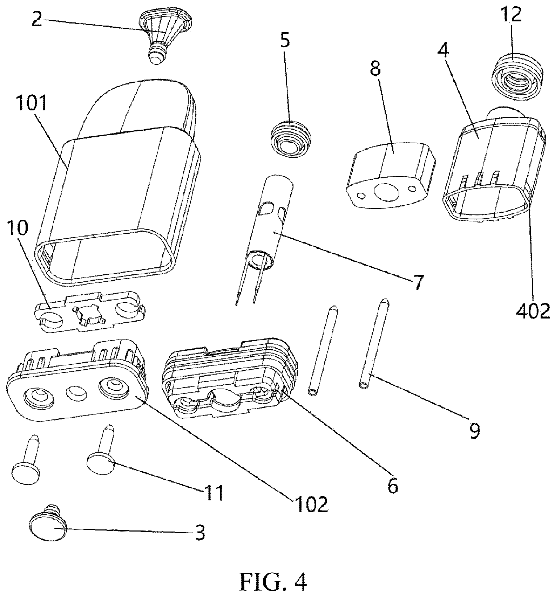

As shown in FIGS. 1-4, an atomization device with stable pressure relief and suction of the present disclosure includes an atomizer body 1.

The atomizer body 1 includes an atomizer main case 101 and an atomizer bottom case 102, and the atomizer main case 101 is in snapped fit with the atomizer bottom case 102.

The atomizer body 1 is provided with a suction nozzle 103, and the atomizer bottom case 102 is provided with an air inlet hole 104.

The atomization device with stable pressure relief and suction further includes a dustproof upper plug 2 and a dustproof lower plug 3, the dustproof upper plug 2 is provided in the suction nozzle 103, and the dustproof lower plug 3 is provided in the air inlet hole 104.

The dust-proof upper plug 2 and dust-proof lower plug 3 can effectively isolate the atomizer from external dust and air during transportation or inhaling.

The atomizer body 1 is provided with an e-liquid cup barrel 4, an atomizing e-liquid sealing silica gel 5 and a lower e-liquid sealing silica gel 6.

The e-liquid cup barrel 4 is provided with an atomizing core assembly 7 and an e-liquid storage cotton 8.

The inner wall of the e-liquid cup barrel 4 is provided with an atomizing mounting position that cooperates with the upper end of the atomizing core assembly 7, and the atomizing e-liquid sealing silica gel 5 is set on the upper end of the atomizing core assembly 7.

By setting the atomizing e-liquid sealing silica gel 5, the sealing of the connection between the atomizing core assembly 7 and the atomizing mounting position can be ensured, and e-liquid leakage at the connection can be prevented.

The e-liquid storage cotton 8 is provided with an atomization through-hole that cooperates with the atomizing core assembly 7, and the atomizing core assembly 7 is provided through the atomization through-hole.

The inner wall of the e-liquid cup barrel 4 is provided with a mounting step 401 that is fitted in cooperation with the e-liquid storage cotton 8, and the mounting step 401 is capable of restricting the upper end of the e-liquid storage cotton 8.

The atomizer main case 101 is provided with a circulating e-liquid compartment 1011, the e-liquid cup barrel 4 is provided with a circulating e-liquid hole 402, and the lower e-liquid sealing silica gel 6 is provided at the lower end of the atomizer main case 101, and at the same time seals the circulating e-liquid compartment 1011 and the lower end of the e-liquid cup barrel 4.

The circulating e-liquid compartment 1011 is formed by an inner wall of the atomizer main case 101, an outer wall of the e-liquid cup barrel 4 and an upper surface of the lower e-liquid sealing silica gel 6.

Through the provision of the circulating e-liquid compartment 1011, it is possible to, in the case of an imbalance of air pressure inside and outside the atomizer device, through the circulating e-liquid hole 402, cause the e-liquid in the e-liquid cup barrel 4 to flow into the circulating e-liquid compartment 1011, or the e-liquid in the circulating e-liquid compartment 1011 to be transferred to the e-liquid cup barrel 4, and thus realize the balance of the pressure relief.

The number of circulating e-liquid holes 402 may be two, and the two circulating e-liquid holes 402 are respectively provided at the lower ends of the two sides of the e-liquid cup barrel 4.

The provision of the two circulating e-liquid holes 402 enables the e-liquid in the e-liquid cup barrel 4 to flow more efficiently to/from the circulating e-liquid compartment 1011.

The atomization device with stable pressure relief and suction further includes an air guide pressure relief member, the air guide pressure relief member is an air guide tube 9, and the lower end of the air guide tube 9 is connected to the air inlet hole 104.

The lower e-liquid sealing silica gel 6 is provided with an air guide mounting position that cooperates with the lower end of the air guide tube 9, the inner wall of the e-liquid cup barrel 4 is provided with an air-avoiding guide groove that cooperates with the upper end of the air guide tube 9, the e-liquid storage cotton 8 is provided with an air guide perforation that cooperates with the air guide tube 9, and the upper end of the air guide tube 9 is passed through the air guide perforation and set in the air-avoiding guide groove.

Through the provision of the air guide tube 9, the airflow flowing into the air inlet hole 104 can be diverted and cooperate with the e-liquid cup barrel 4 to relieve pressure.

The number of air guide tubes 9 is two, and the two air guide tubes 9 are symmetrically provided on both sides of the atomizing core assembly 7.

The atomization device with stable pressure relief and suction further includes an e-liquid-absorbing cotton 10, an e-liquid-absorbing placing position is provided on the atomizer bottom case 102 to cooperate with the e-liquid-absorbing cotton 10, and an atomizing flow channel is provided in the atomizing core assembly.

By the provision of the e-liquid-absorbing cotton 10, condensate and e-liquid remaining in the atomization flow can be adsorbed.

The atomization device with stable pressure relief and suction also includes two electrode pillars 11, two atomizing pins are provided on the atomizing core assembly 7, the two atomizing pins cooperate with the two electrode pillars 11 one by one. The atomizer bottom case 102 is provided with electrode holes that cooperate with the electrode pillars 11, and a motor mounting groove that cooperates with the electrode pillars 11 is provided in the lower e-liquid sealing silica gel 6.

The atomization device with stable pressure relief and suction also includes an upper sealing silica gel 12, an upper end of the e-liquid cup barrel is provided with a clamping convex ring that cooperates with the suction nozzle 13.

The provision of the upper sealing silica gel 12 ensures the sealing between the clamping convex ring and the suction nozzle 103, preventing e-liquid leakage at the connection between the clamping convex ring and the suction nozzle 103.

The upper surface of the lower e-liquid sealing silica gel 6 is provided with mounting grooves for the e-liquid cup barrel 4 and the atomizer core assembly 7. The e-liquid cup barrel 4 and the atomizer core assembly 7 are provided in the corresponding mounting grooves.

The atomizing core assembly 7 includes an atomizing bracket, an e-liquid-conducting cotton and a heating wire, and an e-liquid-conducting hole 701 is provided in the atomizing bracket.

The embodiment of the present disclosure provides an atomization device with stable pressure relief and suction in a negative pressure box of different air pressure states. The specific pressure relief balance process is as follows. The embodiment of the present disclosure provides the advantage of stable pressure relief and suction and low probability of e-liquid leakage compared to existing atomization devices.

First of all, the product is put into the negative pressure box under pressure 60kpa, the atomization device internal environment has a pressure 100kpa.

After the product is put into the negative pressure box, the pressure relief process is carried out, and the e-liquid in the circulating e-liquid compartment 1011 will be pushed into the e-liquid storage cotton 8 through the circulating e-liquid hole 402. The amount of the e-liquid to be pushed into the e-liquid storage cotton 8 through the circulating e-liquid hole 402 is determined according to the number of bubbles in the circulating e-liquid compartment 1011.

Some of the air flows out from e-liquid guide hole 701 and exits from suction nozzle 103 or air inlet hole 104. Another portion of the air travels upwards, passing through the air-avoiding guide groove and flowing through the upper end of the air guide tube 9, entering the air guide tube 9, and exiting from the lower end of the air guide tube 9, ultimately exiting from the air inlet hole 104, completing the pressure relief process.

After pressure relief, the internal pressure of the atomizer is 60 kPa, and the pressure in the negative pressure box is adjusted to 100 kPa.

The atomizer undergoes a pressure balance process, with external ambient air entering the atomizer environment through suction nozzle 103 and air inlet hole 104. Some of the air enters from the lower end of the air guide tube 9 and exits from the upper end of the guide tube 9. Another portion of the air flows into the e-liquid guide cotton through the air guide hole, causing the e-liquid inside the cotton to be pushed back into circulating e-liquid compartment through the circulating e-liquid hole 402. This process forms new bubbles inside the circulating e-liquid compartment 1011, determining how much e-liquid is pushed into the circulating e-liquid compartment 1011, thereby achieving pressure balance.

From the above, it can be inferred that the beneficial effect of the present disclosure is as follows. By adopting its structure, it effectively solves the problem of internal pressure instability and e-liquid leakage in the atomizer of the existing technology under different pressure environments. By using the structure of this product, the e-liquid in the circulating e-liquid compartment 1011 and e-liquid cup barrel 4 can circulate from circulating e-liquid hole 402 according to different pressure differentials, achieving stable and efficient pressure relief, ensuring pressure balance, reducing the probability of e-liquid leakage, effectively enhancing the user experience, and thereby improving the competitiveness of the enterprise.

The specific embodiments described above are preferred embodiments of the present disclosure, which are not intended to limit the scope of the present specification. The scope of the present disclosure includes, but is not limited to, the specific embodiments described herein. Any equivalent changes made in accordance with the present disclosure are within the scope of protection of the present disclosure.

## Claims

1. An atomization device with stable pressure relief and suction, comprising an atomizer body, wherein the atomizer body is internally provided with an e-liquid cup barrel, the e-liquid cup barrel is provided with an air guide pressure relief member, an atomizing core assembly and an e-liquid storage cotton, the atomizer body is provided with an air inlet hole at a lower end, the atomizer body is internally provided with a circulating e-liquid compartment, the e-liquid cup barrel is provided with a circulating e-liquid hole, the circulating e-liquid compartment is able to balance a pressure by flowing of e-liquid in the e-liquid cup barrel through the circulating e-liquid hole, and a lower end of the air guide pressure relief member is communicated with the air inlet hole, and the air guide pressure relief member is able to cooperate with the air inlet hole to realize circulating pressure relief in the e-liquid cup barrel.

2. The atomization device with stable pressure relief and suction according to claim 1, wherein the air guide pressure relief member is an air guide tube, the e-liquid storage cotton is provided with an air guide perforation which cooperates with the air guide tube, an upper end of the air guide tube is arranged to pass through the air guide perforation and protrude out of an upper surface of the e-liquid storage cotton.

3. The atomization device with stable pressure relief and suction according to claim 2, wherein an inner wall of the e-liquid cup barrel is provided with an air-avoiding guide groove cooperating with the upper end of the air guide tube, and the upper end of the air guide tube is provided in the air-avoiding guide groove.

4. The atomization device with stable pressure relief and suction according to claim 2, wherein the air guide tube is provided in two, and the two air guide tubes are symmetrically provided on both sides of the atomizing core assembly.

5. The atomization device with stable pressure relief and suction according to claim 1, wherein the atomizer body is also provided with an atomizing e-liquid sealing silica gel and a lower e-liquid sealing silica gel, the lower e-liquid sealing silica gel is capable of sealing the atomizer body and a lower end of the e-liquid cup barrel, an inner wall of the e-liquid cup barrel is provided with an atomizing mounting position which is cooperated with an upper end of the atomizing core assembly, the atomizing e-liquid sealing silica gel is sleeved at the atomizing core assembly, the atomizing e-liquid sealing silica gel is able to ensure sealing between the upper end of the atomizing core assembly and the atomizing mounting position.

6. The atomization device with stable pressure relief and suction according to any one of claims 1-5, wherein the atomizer body comprises an atomizer main case and an atomizer bottom case, and the atomizer main case is in snapped fit with the atomizer bottom case.

7. The atomizing device with stable pressure relief and suction according to claim 6, further comprising an e-liquid-absorbing cotton, the atomizer bottom case is provided with an e-liquid-absorbing placing position for cooperating with the e-liquid-absorbing cotton, and an atomizing flow channel is provided within the atomizing core assembly, and the e-liquid-absorbing cotton is capable of adsorbing condensate and e-liquid left by an atomizing flow.

8. The atomization device with stable pressure relief and suction according to claim 6, further comprising two electrode pillars, two atomizing pins are provided on the atomizing core assembly, the two atomizing pins cooperate with the two electrode pillars one by one, electrode holes are provided in the atomizer bottom case to cooperate with the electrode pillars, and a motor mounting groove is provided in the lower e-liquid sealing silica gel for fixing in cooperation with the electrode pillars.

9. The atomization device with stable pressure relief and suction according to any one of claims 1-5, wherein the e-liquid cup barrel is provided with a mounting step on the inner wall to cooperate and install with the e-liquid storage cotton, and the mounting step is capable of restricting an upper end of the e-liquid storage cotton.

10. The atomization device with stable pressure relief and suction according to any one of claims 1-5, further comprising an upper sealing silica gel, wherein a suction nozzle is provided at an upper end of the atomizer body, an upper end of the e-liquid cup barrel is provided with a clamping convex ring that cooperates with the suction nozzle, the upper sealing silica gel is sleeved on the clamping convex ring, and the upper sealing silica gel is able to ensure the sealing between the clamping convex ring and the suction nozzle.
